# DEMANDE DE BREVET EUROPEEN

(11) **EP 2 775 013 A1**
(43) Date de publication de la demande: **10.09.2014**
(21) Numéro de dépôt: 14158167.8
(22) Date de dépôt: 06.03.2014
(51) Int. Cl.: C25B 1/04, C25B 9/18

(54) **Ensemble modulaire de couplage d'unités électrochimiques**

(30) Priorité: 08.03.2013 FR 1352111
(71) Demandeur: Ceram Hyd, 77250 Ecuelles (FR)
(72) Inventeur: HAUSCHILD, Martin Johannes, 77300 FONTAINEBLEAU (FR); MOFAKHAMI, Arash, 77760 BUTHIERS (FR); HAMITI, Abd Elghani, 77000 MELUN (FR)
(74) Mandataire: Nony

(57) **Abrégé**

La présente invention concerne un ensemble modulaire de couplage d'unités électrochimiques (50), comportant au moins un module (10) comportant un bâti de support pour recevoir au moins deux unités électrochimiques (50), le bâti de support comportant :
- des moyens de connexion fluidiques principaux de couplage entre modules juxtaposés,
- des moyens de connexion fluidiques secondaires avec les unités électrochimiques portées par le bâti de support.

## Description

La présente invention concerne les installations électrochimiques, notamment d'électrolyse.

Il existe un intérêt pour adapter facilement la puissance de telles installations en fonction des besoins.

L'invention a pour but de satisfaire à cette demande, et elle y parvient grâce à un ensemble modulaire de couplage d'unités électrochimiques, comportant au moins un module comportant un bâti de support pour recevoir au moins deux unités électrochimiques, le bâti de support comportant :
- des moyens de connexion fluidiques principaux de couplage entre modules juxtaposés,
- des moyens de connexion fluidiques secondaires avec les unités électrochimiques portées par le bâti de support.

Grâce à l'invention, la puissance de l'installation peut être facilement modulée en fonction des besoins en couplant plus ou moins de modules et en agissant également, le cas échéant, sur le nombre d'unités portées par un module.

De plus, l'invention permet de remplacer aisément une unité par une autre pour des opérations de maintenance par exemple.

Le bâti de support peut comporter des platines de réception des unités électrochimiques. Les platines peuvent supporter des connecteurs électriques pour l'alimentation des unités électrochimiques, notamment des connecteurs anti-déflagration (ATEX).

Le bâti de support peut comporter une colonne portant les platines et les connecteurs fluidiques principaux et auxiliaires. Les connecteurs peuvent comporter des vannes électriques ou pneumatiques intégrées.

Les connecteurs fluidiques principaux peuvent être disposés sur des faces opposées de la colonne.

Les platines peuvent être disposées par deux sur des faces opposées de la colonne.

Le bâti peut porter des connecteurs d'alimentation électrique communs à l'ensemble des unités électrochimiques d'un module.

Les connecteurs d'alimentation communs sont de préférence disposés sur le dessus de la colonne.

Le module peut comporter des relais permettant une alimentation électrique sélective des unités électrochimiques.

Les moyens de connexion fluidique secondaires sont de préférence équipés de clapets à fermeture automatique en cas de déconnexion.

Les clapets des moyens de connexion fluidiques secondaires peuvent comporter au moins un clapet anti-retour. Tous les clapets des moyens de connexion fluidiques secondaires peuvent être à anti-retour. Plus particulièrement, les clapets d'alimentation sont à anti-retour. De préférence, un ou des clapets disposés entre une unité électrochimique placée en haut et une unité électrochimique placée en bas sont à anti-retour. Ainsi, lors du fonctionnement, on peut éviter qu'une unité électrochimique placée en haut se vide dans une unité électrochimique placée en bas.

Les unités électrochimiques sont de préférence des unités d'électrolyse. La puissance électrique d'un module est par exemple supérieure ou égale à 20 kW.

Les modules peuvent être identiques, de même que les unités.

L'invention a encore pour objet une installation électrochimique comportant un ensemble modulaire et au moins une unité électrochimique portée par un module.

L'installation peut comporter au moins deux modules portant chacun au moins une unité électrochimique, mieux au moins quatre modules portant chacun au moins deux unités.

L'invention pourra être mieux comprise à la lecture de la description détaillée qui va suivre, d'un exemple non limitatif de mise en oeuvre de celle-ci, et à l'examen du dessin annexé, sur lequel :
- la figure 1 représente un ensemble modulaire selon l'invention,
- la figure 2 représente isolément un module, avec les unités électrochimiques enlevées,
- la figure 3 est une vue analogue à la figure 2, les panneaux de la colonne du bâti étant enlevés,
- la figure 4 est une vue de face selon IV de la figure 3,
- la figure 5 est une vue analogue à la figure 2 avec les unités électrochimiques en place,
- la figure 6 représente isolément un élément d'interconnexion,

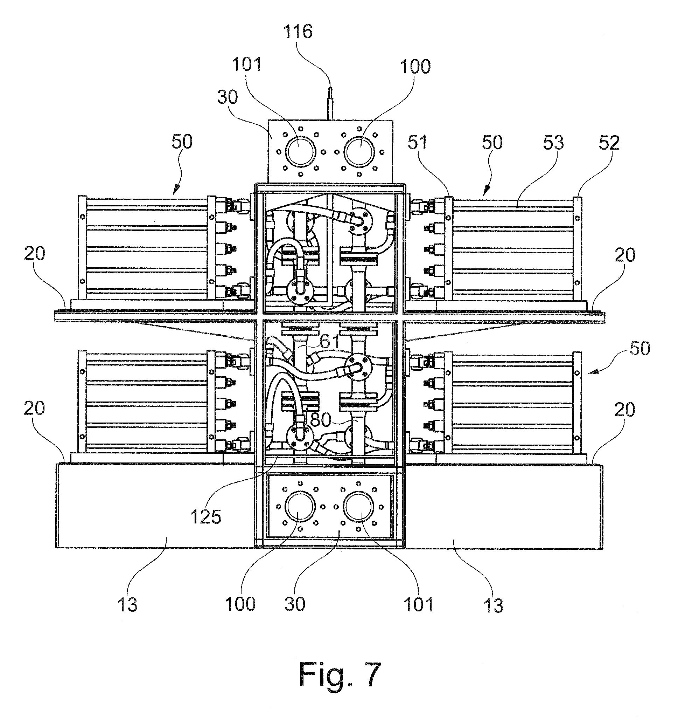

- la figure 7 est une vue analogue à la figure 4, avec les unités électrochimiques en place,

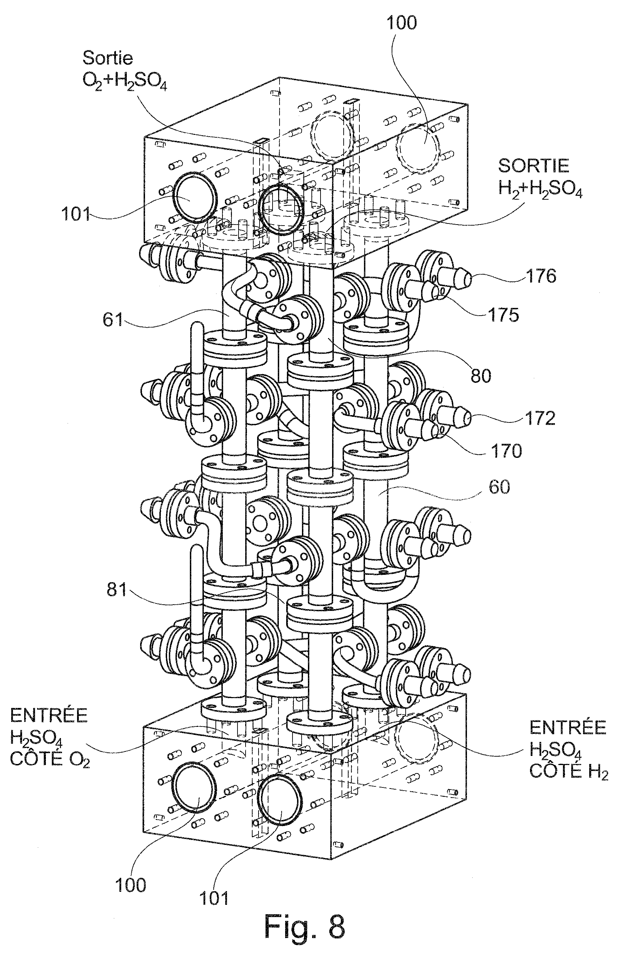

- la figure 8 représente isolément l'ensemble des colonnes de distribution ou de collecte d'un module,
- la figure 9 illustre la connectique depuis les bornes d'alimentation vers les différentes unités,
- la figure 10 représente une unité électrochimique isolément, et
- les figures 11 et 12 sont des vues respectivement de dessous et de dessus de l'unité de la figure 10.

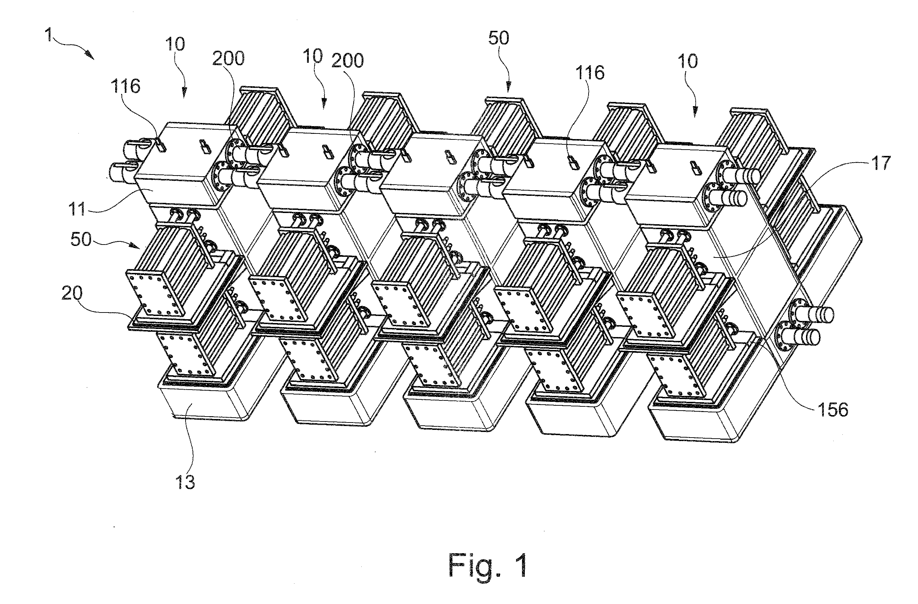

L'ensemble 1 représenté à la figure 1 comporte une pluralité de modules 10, en l'espèce au nombre de cinq, interconnectés et recevant une pluralité d'unités électrochimiques 50.

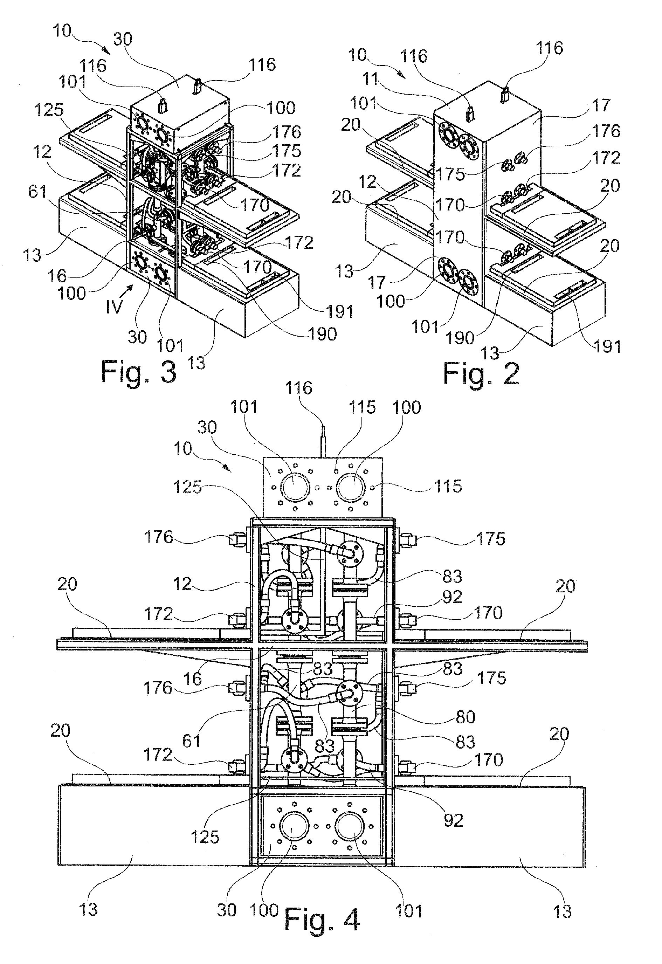

Chaque module 10 comporte, comme on peut le voir notamment sur les figures 2 à 4, un bâti de support 11 comportant une colonne 12 portant des platines supérieures 20 destinées chacune à supporter une unité électrochimique 50.

Le bâti comporte outre la colonne 12 deux bases latérales 13 portant des platines 20 inférieures destinées à supporter chacune également une unité électrochimique 50.

La colonne 12 comporte un châssis 16 sur lequel sont fixés des panneaux de façade 17, enlevés sur la figure 3.

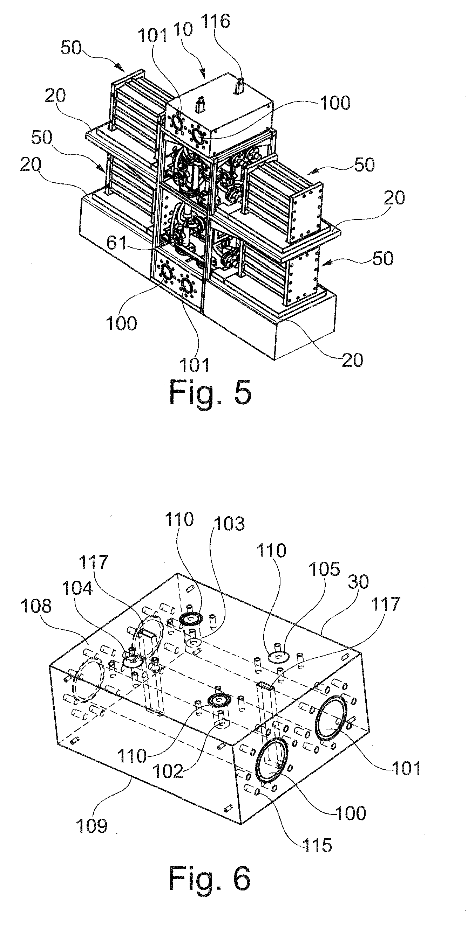

Le châssis 16 supporte des éléments d'interconnexion 30 supérieur et inférieur, dont l'un d'eux a été représenté isolément à la figure 6.

Deux colonnes de distribution 60 et 61 pour l'alimentation en électrolyte et deux colonnes 80 et 81 de collecte d'électrolyte et de gaz produits s'étendent à l'intérieur de la colonne 12 du bâti 11 pour véhiculer des fluides liquides ou gazeux vers et depuis les unités électrochimiques 50.

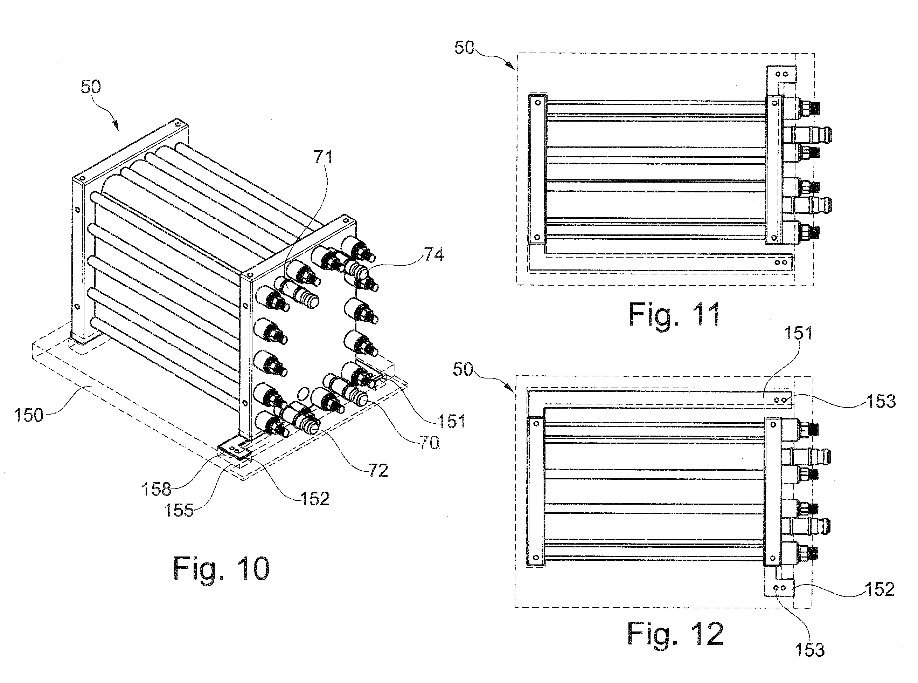

Celles-ci sont de préférence des unités d'électrolyse, auquel cas, elles doivent, comme illustré à la figure 10, être parcourues par un électrolyte circulant entre une arrivée 70 d'électrolyte côté O₂, une arrivée 72 d'électrolyte côté H₂, un retour 71 d'électrolyte côté O₂ et un retour 74 d'électrolyte côté H₂.

Les retours 71 et 74 véhiculent respectivement les gaz O₂ et H₂. L'électrolyte est par exemple une solution de H₂SO₄ (acide), de l'eau déminéralisée ou encore une solution de KOH (basique).

Toues les arrivées 70 des unités d'un même module 10 communiquent avec la colonne 60 de distribution d'électrolyte côté H₂ par des tubulures 92 et raccords 170, ces derniers étant portés par le châssis 16.

Toutes les arrivées 72 communiquent avec la colonne de distribution 61 côté O₂ par des tubulures et raccords 172, ces derniers étant portés par le châssis 16.

Des raccords d'entrée 175 et 176 portés par le châssis 16 permettent de récupérer les gaz O₂ et H₂ produits par l'électrolyse et se raccordant respectivement par des tubulures 83 aux colonnes de récupération 80 et 81.

De préférence, les raccords 175 et 176, ainsi que les raccords 170 et 172, sont équipés de connecteurs agencés pour coopérer avec des connecteurs correspondants des unités électrochimiques et l'un au moins de chaque paire de connecteurs, mieux les deux, sont avantageusement munis de clapets qui se ferment automatiquement en cas d'enlèvement d'une unité électrochimique 50.

Chaque élément de connexion 30 comporte des conduits principaux 100 et 101 et des conduits auxiliaires 102 et 103. Les conduits auxiliaires 102 et 103 communiquent respectivement avec les conduits principaux 100 et 101. Des joints 110 sont prévus au niveau des conduits auxiliaires 102 et 103 et de leurs emplacements symétriques 104 et 105. L'élément de connexion supérieur 30 est identique à l'élément de connexion inférieur, mais a été retourné.

Des taraudages 115 sont prévus dans l'élément 30 pour la fixation des diverses colonnes et raccords.

Les éléments de connexion 30 peuvent être réalisés par usinage dans la masse ou par moulage ou autrement

Les conduits auxiliaires 102 et 103 débouchent sur la face supérieure 108 de l'élément de connexion inférieur 30.

Inversement, les conduits auxiliaires 102 et 103 débouchent sur la face inférieure 109 de l'élément de connexion 30 supérieur.

Les colonnes 60, 61, 80 et 81 sont fixées à leurs extrémités sur les éléments de connexion 30.

Ainsi, la colonne 80 de récupération H₂ et électrolyte communique à son extrémité supérieure avec le conduit principal 100 de l'élément de connexion supérieur 30 et se trouve obturée à son extrémité inférieure par l'élément de connexion inférieur 30 à l'emplacement 105.

La colonne 81 communique à son extrémité supérieure avec le conduit principal 101 de l'élément de connexion supérieur 30 et se trouve obturée à son extrémité inférieure par l'élément de connexion inférieur 30 à l'emplacement 104.

La colonne 60 communique à son extrémité inférieure avec le conduit principal 101 de l'élément de connexion inférieur 30 et se trouve obturée à son extrémité supérieure par l'élément de connexion supérieur 30 à l'emplacement 104.

La colonne 61 communique à son extrémité inférieure avec le conduit principal 100 de l'élément de connexion inférieur 30 et se trouve obturée à son extrémité supérieure par l'élément de connexion supérieur 30 à l'emplacement 105.

Ainsi, l'arrivée de l'électrolyte pour l'ensemble des unités 50 peut se faire par les conduits principaux 100 côté O₂ et 101 côté H₂ des éléments de connexion inférieurs 30 et le retour de l'électrolyte et des gaz H₂ et O₂ par les conduits principaux 101 côté O₂ et 100 côté H₂ des éléments de connexion supérieurs 30.

Deux modules adjacents 10 peuvent être reliés entre eux par des raccords souples ou rigides 200 pourvus de brides fixées à leurs extrémités sur les éléments de connexion 30 en regard, avec interposition de joints, de façon à permettre au conduit principal d'un élément de connexion de communiquer avec son voisin.

La connexion fluidique entre deux modules peut se faire par tout moyen de connexion, notamment à l'aide de tout type de raccord mais aussi de connecteurs rapides ou de canalisations serties, vissées ou soudées sur les modules 10.

Les mêmes conduits principaux 100 ou 101 des mêmes éléments 30 supérieurs et inférieurs des différents modules sont reliés en série. Des canalisations non représentées communiquent avec les conduits principaux des éléments de connexion d'un module d'extrémité 10 pour le fonctionnement de l'ensemble, étant reliées par exemple à une ou plusieurs des pompes ainsi qu'à des réservoirs de stockage.

Les conducteurs électriques d'alimentation des unités d'un module 10 débouchent sur le haut du module 10 par des pattes 116 grâce à des perçages correspondants 117 réalisés dans les éléments de connexion 30.

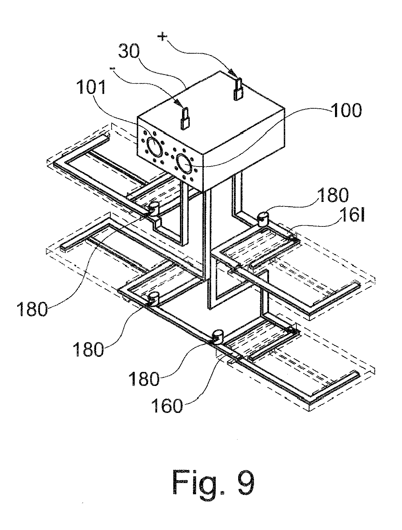

Comme on peut le voir sur la figure 9, chaque module comporte des relais 180 associés à chaque unité 50 qui permettent de court-circuiter électriquement cette unité, les quatre unités 50 étant reliées électriquement en série.

Comme on peut le voir sur les figures 10 à 12, chaque unité 50 comporte un socle 150 destiné à se fixer sur la platine 20 correspondante, socle sur lequel sont fixées deux conducteurs 151 et 152 pourvus par exemple comme illustré de perçage 153 pour le passage d'éléments de fixation tels que des vis, afin de permettre de plaquer ces conducteurs 151 et 152 contre des conducteurs en attente sur les platines 20.

Le socle 150 présente un décrochement 155 du côté des divers raccords hydrauliques de l'unité 50, qui s'emboite sous un rebord correspondant 156 prévu sur le module 10. Les conducteurs 151 et 152 s'étendent en avant du décrochement 155. Le socle peut être évidé en 158 sous les extrémités de connexion des conducteurs 151 et 152 pour permettre aux extrémités de connexion en attente sur les platines 20 de se superposer à ces extrémités de connexion.

Le socle 150 présente des ouvertures 190 et 191 par lesquelles les plaques de l'unité se raccordent aux conducteurs 151 et 152.

Le nombre d'unités 50 par module n'est pas limité à quatre et peut varier. Le nombre de modules peut également varier.

Les unités électrochimiques peuvent être, en variante, des unités de pile à combustible ou encore des piles à combustibles rechargeables (« flow battery »).

De préférence, chaque module répond aux normes d'anti-déflagration ATEX, en évitant la production d'étincelles dans l'environnement extérieur.

## Revendications

1. Ensemble modulaire de couplage d'unités électrochimiques (50), comportant au moins un module (10) comportant un bâti de support pour recevoir au moins deux unités électrochimiques (50), le bâti de support comportant :
- des moyens de connexion fluidiques principaux (100, 101) de couplage entre modules juxtaposés,
- des moyens de connexion fluidiques secondaires (170, 171, 175, 176) avec les unités électrochimiques portées par le bâti de support.

2. Ensemble selon la revendication 1, le bâti de support comportant des platines (20) de réception des unités électrochimiques (50).

3. Ensemble selon la revendication 2, les platines supportant des connecteurs électriques pour l'alimentation des unités électrochimiques, notamment des connecteurs anti-déflagration.

4. Ensemble selon l'une quelconque des revendications 2 et 3, le bâti de support comportant une colonne (11) portant les platines et les connecteurs fluidiques principaux et auxiliaires.

5. Ensemble selon la revendication 4, les connecteurs fluidiques principaux étant disposés sur des faces opposées de la colonne.

6. Ensemble selon la revendication 4 ou 5, les platines (20) étant disposées par deux sur des faces opposées de la colonne.

7. Ensemble selon l'une quelconque des revendications précédentes, le bâti portant des connecteurs (116) d'alimentation électrique étant communs à l'ensemble des unités électrochimiques du module (10).

8. Ensemble selon les revendications 4 et 7, les connecteurs d'alimentation communs (116) étant disposés sur le dessus de la colonne.

9. Ensemble selon l'une quelconque des revendications précédentes, le module (10) comportant des relais (180) permettant une alimentation électrique sélective des unités électrochimiques.

10. Ensemble selon l'une quelconque des revendications précédentes, les moyens de connexion fluidiques secondaires (170, 171, 175, 176) étant équipés de clapets à fermeture automatique en cas de déconnexion.

11. Ensemble selon la revendication précédente, les clapets des moyens de connexion fluidiques secondaires (170, 171, 175, 176) comportant au moins un clapet anti-retour.

12. Ensemble selon l'une quelconque des revendications précédentes, les unités électrochimiques (50) étant des unités d'électrolyse.

13. Ensemble selon l'une quelconque des revendications précédentes, la puissance électrique d'un module (10) étant supérieure ou égale à 20 kW.

14. Installation électrochimique (1) comportant un ensemble modulaire tel que défini dans l'une quelconque des revendications précédentes et au moins une unité électrochimique (50) portée par un module (10).

15. Installation selon la revendication précédente, comportant au moins deux modules (10) portant chacun au moins une unité électrochimique (50).
